# EUROPEAN PATENT APPLICATION

(11) **EP 4 510 689 A1**
(43) Date of publication of application: **19.02.2025**
(21) Application number: 23802848.4
(22) Date of filing: 08.05.2023
(51) Int. Cl.: H04W 24/10

(54) **COMMUNICATION METHOD AND APPARATUS**

(30) Priority: 11.05.2022 CN 202210510815
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN); HU, Xingxing, Shenzhen, Guangdong 518129 (CN)
(74) Representative: Goddar, Heinz J.
(86) International application number: PCT/CN2023/092731
(87) International publication number: WO 2023/217078

(57) **Abstract**

This application provides a communication method and apparatus, so that a terminal device reports an RLF report related to whether link recovery for an MCG succeeds. The terminal device separately communicates with a first network device and a second network device, where the first network device manages a first MCG, the second network device manages a first SCG, and an MCG link recovery function is configured for the first SCG. After determining that a radio link failure RLF occurs in the first MCG, the terminal device sends a first RLF report to a third network device, where the first RLF report is related to whether link recovery for the first MCG succeeds. In this way, the terminal device can report the RLF report related to whether the link recovery for the MCG succeeds, improving effect of mobility optimization performed by the network device based on the RLF report.

## Description

### CROSS-REFERENCE TO RELATED APPLICATIONS

This application claims priority to Chinese Patent Application No. 202210510815.9, filed with the China National Intellectual Property Administration on May 11, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In dual-connectivity (dual-connectivity, DC) or multi-connectivity (multi-connectivity, MC) communication, a terminal device may have communication connections to at least two access network devices at the same time, for example, one master base station and one or more secondary base stations. The master base station manages a master cell group (master cell group, MCG), and the secondary base station manages a secondary cell group (secondary cell group, SCG). The terminal device may obtain a communication service of the master base station by using a cell in the MCG, and may obtain a communication service of the secondary base station by using a cell in the SCG.

In the foregoing dual-connectivity or multi-connectivity communication scenario, when detecting that a radio link failure (radio link failure, RLF) occurs in the MCG, the terminal device may attempt to recover a connection between the terminal device and the MCG by using a fast MCG link recovery (fast MCG link recovery) procedure.

However, if a network device cannot obtain a related parameter of the fast MCG link recovery procedure in time, the network device cannot perform mobility optimization for the MCG link recovery procedure, affecting dual-connectivity or multi-connectivity communication quality.

### SUMMARY

This application provides a communication method and apparatus, so that a terminal device reports an RLF report related to whether link recovery for an MCG succeeds. In this way, effect of mobility optimization performed by a network device based on the RLF report is improved.

According to a first aspect, this application provides a communication method. The method may include: A terminal device separately communicates with a first network device and a second network device. After determining that an RLF occurs in a first MCG, the terminal device sends a first RLF report to a third network device, where the first RLF report is related to whether link recovery for the first MCG succeeds. The first network device manages the first MCG, the second network device manages a first SCG, and an MCG link recovery function is configured for the first SCG.

The third network device may be the first network device or the second network device. When an RLF occurs in the first SCG managed by the second network device, the third network device may be the second network device.

According to the foregoing method, the terminal device may report, to a network device, an RLF report related to whether link recovery for an MCG succeeds, so that effect of mobility optimization performed by the network device based on the RLF report is improved. Specifically, the network device may perform optimization for a network parameter related to the link recovery for the MCG, to improve a success rate of subsequent MCG connection re-establishment. In this way, continuity and reliability of dual-connectivity or multi-connectivity communication performed by the terminal device are enhanced, and communication quality is improved.

In a possible design, when the link recovery for the first MCG fails, the first RLF report may include a cause of a link recovery failure. In this way, the network device may subsequently analyze, based on the first RLF report, the cause of the link recovery failure of the first MCG, and adjust the related network parameter.

In a possible design, the cause of the link recovery failure may include one or more of the following: the first SCG is added, the first SCG is changed, or transmission of the first SCG is suspended. In this way, the network device may subsequently analyze, based on the first RLF report, the cause of the link recovery failure of the first MCG, and adjust the related network parameter.

In a possible design, if the first SCG is added or changed or the transmission of the first SCG is suspended, the terminal device determines not to perform the link recovery for the first MCG, so that the terminal device determines that the link recovery for the first MCG fails.

In a possible design, if RLF information of the first MCG fails to be sent to the second network device, the terminal device determines that the link recovery for the first MCG fails. In this way, the terminal device may locate the cause of the unsuccessful link recovery for the first MCG, and further record related cause information in the RLF report, so that the network device performs cause analysis.

In a possible design, after the terminal device sends RLF information of the first MCG to the second network device by using the first SCG, if a response message for the RLF information of the first MCG is not received within first preset duration, the terminal device determines that the link recovery for the first MCG fails. In this way, the terminal device may locate the cause of the unsuccessful link recovery for the first MCG, and further record related cause information in the RLF report, so that the network device performs cause analysis.

In a possible design, the first RLF report may include one or more of the following: a cause of a link recovery failure, indication information indicating whether the RLF information of the first MCG is successfully sent to the second network device by using the first SCG, first time information, or RLF information of the first SCG. The first time information indicates first running time of a first timer. The first running time is greater than or equal to preset duration of the first timer, and the first running time is duration from time when the terminal device sends the RLF information of the first MCG to the second network device by using the first SCG to time when the terminal device initiates a radio resource control (radio resource control, RRC) re-establishment procedure. In this way, the RLF report may be enhanced based on a scenario in which an MCG link recovery procedure initiated by the terminal device fails, so that the network device can optimize the MCG link recovery procedure. In this way, the related network parameter is optimized. For example, a configuration parameter of the first SCG may be optimized. Because the first SCG is configured to send the RLF information of the first MCG, after the configuration parameter of the first SCG is optimized, occurrence of an RLF in the first SCG may be reduced subsequently, so that the terminal device can successfully communicate with the second network device.

In a possible design, the cause of the link recovery failure may include one or more of the following: the link recovery for the first MCG fails because beam recovery fails after a beam of the first SCG fails, random access for the first SCG fails, or a maximum quantity of radio link control RLC retransmissions for the first SCG is reached. In this way, the specific cause of the link recovery failure can be determined, and network optimization can be performed accurately.

In a possible design, the RLF information of the first SCG may include one or more of the following: identification information of the first SCG, a cause of an RLF that occurs in the first SCG, or a cause of a change failure in the first SCG. In this way, the first SCG in which a problem occurs can be determined, so that the network device can optimize the configuration parameter of the first SCG. Because the first SCG is configured to send the RLF information of the first MCG, after the configuration parameter of the first SCG is optimized, the occurrence of the RLF in the first SCG may be reduced subsequently, so that the terminal device can successfully communicate with the second network device.

In a possible design, when the link recovery for the first MCG succeeds, the terminal device may further determine whether the terminal device is successfully handed over from the first MCG to a second MCG. Then, the terminal device determines the first RLF report depending on whether the terminal device is successfully handed over from the first MCG to the second MCG. In this way, when the link recovery for the first MCG succeeds, content of the first RLF report may be determined with reference to an actual handover status of the terminal device, so that the network device optimizes a subsequent handover procedure, to improve a handover success rate.

In a possible design, when the terminal device is not successfully handed over from the first MCG to the second MCG, the first RLF report may include RLF information of the first MCG, and handover failure information of the second MCG or RLF information of the second MCG. In this way, the RLF report may be enhanced based on a scenario in which an RLF failure occurs in the second MCG after the MCG link recovery procedure initiated by the terminal device succeeds, so that the network device can optimize a subsequent procedure of the MCG link recovery procedure. For example, the network device may adjust an MCG to which the terminal device needs to be handed over. In other words, the terminal device may be handed over from the first MCG to another more suitable MCG than the second MCG, to improve the handover success rate.

In a possible design, the terminal device may determine, according to the following method, that the terminal device is not successfully handed over from the first MCG to the second MCG: If an RLF occurs in the second MCG within second preset duration after the terminal device is handed over to the second MCG, the terminal device determines that the terminal device is not successfully handed over from the first MCG to the second MCG. In this way, when an RLF occurs in the second MCG within excessively short time after the terminal device is handed over to the second MCG, resulting in a case that the terminal device cannot perform communication by using the second MCG, the terminal device can continue to reselect an MCG.

In a possible design, when the terminal device is successfully handed over from the first MCG to the second MCG, the first RLF report may include RLF information of the first MCG and one or more of the following: identification information of the second MCG or second time information. The second time information indicates second running time of a first timer. The second running time is less than preset duration of the first timer, and the second running time is duration from time when the terminal device sends the RLF information of the first MCG to the second network device by using the first SCG to time when the terminal device receives a response message sent by the second network device. In this way, the RLF report is enhanced based on a scenario in which the terminal device performs connection to the second MCG after the MCG link recovery procedure initiated by the terminal device succeeds, so that the network device can optimize, based on the RLF report, the related parameter for the handover from the first MCG to the second MCG. In this way, the terminal device can be handed over from the first MCG to the second MCG quickly. This reduces MCG service interruption time.

According to a second aspect, this application provides a communication method. The method may include: After receiving a first RLF report from a terminal device, a third network device adjusts, based on the first RLF report, a network parameter related to the first RLF report. The first RLF report is related to whether link recovery for a first master cell group MCG succeeds after an RLF occurs in the first MCG. The terminal device separately communicates with a first network device and a second network device, where the first network device manages the first master cell group MCG, the second network device manages a first secondary cell group SCG, and an MCG link recovery function is configured for the first SCG. The third network device may be the first network device or the second network device. When an RLF occurs in the first SCG managed by the second network device, the third network device may be the second network device.

According to the foregoing method, the terminal device may report, to a network device, an RLF report related to whether link recovery for an MCG succeeds, so that effect of mobility optimization performed by the network device based on the RLF report is improved. Specifically, the network device may perform optimization for a network parameter related to the link recovery for the MCG, to improve a success rate of subsequent MCG connection re-establishment. In this way, continuity and reliability of dual-connectivity communication performed by the terminal device are enhanced, and communication quality is improved.

In a possible design, when the link recovery for the first MCG fails, the first RLF report may include a cause of a link recovery failure. In this way, the network device may analyze, based on the first RLF report, the cause of the link recovery failure of the first MCG, and adjust the related network parameter.

In a possible design, the cause of the link recovery failure may include one or more of the following: the first SCG is added, the first SCG is changed, or transmission of the first SCG is suspended. In this way, the network device may analyze, based on the first RLF report, the cause of the link recovery failure of the first MCG, and adjust the related network parameter.

In a possible design, when the link recovery for the first MCG fails, the first RLF report may include one or more of the following: a cause of a link recovery failure, indication information indicating whether RLF information of the first MCG is successfully sent to the second network device by using the first SCG, first time information, or RLF information of the first SCG. The first time information indicates first running time of a first timer. The first running time is greater than or equal to preset duration of the first timer, and the first running time is duration from time when the terminal device sends the RLF information of the first MCG to the second network device by using the first SCG to time when the terminal device initiates an RRC re-establishment procedure. In this way, the RLF report may be enhanced based on a scenario in which an MCG link recovery procedure initiated by the terminal device fails, so that the network device can optimize the MCG link recovery procedure. In this way, the related network parameter is optimized. For example, a configuration parameter of the first SCG may be optimized. Because the first SCG is configured to send the RLF information of the first MCG, after the configuration parameter of the first SCG is optimized, occurrence of an RLF in the first SCG may be reduced subsequently, so that the terminal device can successfully communicate with the second network device.

In a possible design, the cause of the link recovery failure may include one or more of the following: the link recovery for the first MCG fails because beam recovery fails after a beam of the first SCG fails, random access for the first SCG fails, or a maximum quantity of radio link control RLC retransmissions for the first SCG is reached. In this way, the specific cause of the link recovery failure can be determined, and network optimization can be performed accurately.

In a possible design, the RLF information of the first SCG may include one or more of the following: identification information of the first SCG, a cause of an RLF that occurs in the first SCG, or a cause of a change failure in the first SCG. In this way, the first SCG in which a problem occurs can be determined, so that the network device can optimize the configuration parameter of the first SCG. Because the first SCG is configured to send the RLF information of the first MCG, after the configuration parameter of the first SCG is optimized, the occurrence of the RLF in the first SCG may be reduced subsequently, so that the terminal device can successfully communicate with the second network device.

In a possible design, when the link recovery for the first MCG succeeds, the first RLF report is further related to whether the terminal device is successfully handed over from the first MCG to a second MCG. In this way, when the link recovery for the first MCG succeeds, content of the first RLF report may be determined with reference to an actual handover status of the terminal device, so that the network device optimizes a subsequent handover procedure, to improve a handover success rate.

In a possible design, when the terminal device is not successfully handed over from the first MCG to the second MCG, the first RLF report may include RLF information of the first MCG, and handover failure information of the second MCG or RLF information of the second MCG. In this way, the RLF report may be enhanced based on a scenario in which an RLF failure occurs in the second MCG after the MCG link recovery procedure initiated by the terminal device succeeds, so that the third network device can optimize a subsequent procedure of the MCG link recovery procedure. For example, the third network device may adjust an MCG to which the terminal device needs to be handed over. In other words, the terminal device is handed over from the first MCG to another more suitable MCG than the second MCG, to improve the handover success rate.

In a possible design, when the terminal device is successfully handed over from the first MCG to the second MCG, the first RLF report may include RLF information of the first MCG and one or more of the following: identification information of the second MCG or second time information. The second time information indicates second running time of a first timer. The second running time is less than preset duration of the first timer, and the second running time is duration from time when the terminal device sends the RLF information of the first MCG to the second network device by using the first SCG to time when the terminal device receives a response message sent by the second network device. In this way, the RLF report is enhanced based on a scenario in which the terminal device performs connection to the second MCG after the MCG link recovery procedure initiated by the terminal device succeeds, so that the network device can optimize, based on the RLF report, the related parameter for the handover from the first MCG to the second MCG. In this way, the terminal device can be handed over from the first MCG to the second MCG quickly. This reduces MCG service interruption time.

According to a third aspect, this application further provides a communication apparatus. The communication apparatus may be a terminal device, and the communication apparatus has functions of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the first aspect or the possible design examples of the first aspect. For details, refer to detailed descriptions in the method examples. Details are not described herein again.

In a possible design, a structure of the communication apparatus includes a transceiver and a processor, and optionally, further includes a memory. The transceiver is configured to: receive and send information or data, and communicate and interact with another device in a communication system. The processor is configured to support the communication apparatus in performing corresponding functions in the first aspect or the possible design examples of the first aspect. The memory is coupled to the processor, and the memory stores program instructions and data that are necessary for the communication apparatus.

According to a fourth aspect, this application further provides a communication apparatus. The communication apparatus may be a third network device, and the communication apparatus has functions of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the second aspect or the possible design examples of the second aspect. For details, refer to detailed descriptions in the method examples. Details are not described herein again.

In a possible design, a structure of the communication apparatus includes a transceiver and a processor, and optionally, further includes a memory. The transceiver is configured to: receive and send information or data, and communicate and interact with another device in a communication system. The processor is configured to support the communication apparatus in performing corresponding functions in the second aspect or the possible design examples of the second aspect. The memory is coupled to the processor, and the memory stores program instructions and data that are necessary for the communication apparatus.

According to a fifth aspect, an embodiment of this application provides a communication system. The communication system may include the foregoing terminal device, first network device, second network device, third network device, and the like.

According to a sixth aspect, an embodiment of this application provides a computer-readable storage medium. The computer-readable storage medium stores program instructions, and when the program instructions are run on a computer, the computer is enabled to perform the method in the first aspect and any possible design of the first aspect or in the second aspect and any possible design of the second aspect in embodiments of this application. For example, the computer-readable storage medium may be any usable medium that can be accessed by the computer. By way of example but not limitation, the computer-readable medium may include a non-transitory computer-readable medium, a random access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product, including computer program code or instructions. When the computer program code or the instructions are run on a computer, the method in the first aspect or any possible design of the first aspect or in the second aspect or any possible design of the second aspect is performed.

According to an eighth aspect, this application further provides a chip, including a processor. The processor is coupled to a memory, and is configured to read and execute program instructions stored in the memory, so that the chip implements the method in the first aspect or any possible design of the first aspect or in the second aspect or any possible design of the second aspect.

For each of the third aspect to the eighth aspect and technical effects that can be achieved in the aspect, refer to the foregoing descriptions of the technical effects that can be achieved in the first aspect or the possible solutions in the first aspect or in the second aspect or the possible solutions in the second aspect. Details are not described herein again.

### BRIEF DESCRIPTION OF DRAWINGS

FIG. 1 is a diagram of an architecture of a communication system according to this application;
FIG. 2 is a diagram of a base station protocol stack according to this application;
FIG. 3 is a schematic flowchart of a communication method according to this application;
FIG. 4 is a schematic flowchart of an example of a communication method according to this application;
FIG. 5 is a schematic flowchart of another example of a communication method according to this application;
FIG. 6 is a schematic flowchart of another example of a communication method according to this application;
FIG. 7 is a schematic flowchart of another example of a communication method according to this application;
FIG. 8 is a schematic flowchart of another example of a communication method according to this application;
FIG. 9 is a diagram of a structure of a communication apparatus according to this application; and
FIG. 10 is a diagram of a structure of a communication apparatus according to this application.

### DESCRIPTION OF EMBODIMENTS

The following further describes in detail this application with reference to accompanying drawings.

Embodiments of this application provide a communication method and apparatus, so that a terminal device reports an RLF report related to whether link recovery for an MCG succeeds. In this way, effect of mobility optimization performed by a network device based on the RLF report is improved. The method and the apparatus in this application are based on a same technical concept. Because problem-resolving principles of the method and the apparatus are similar, mutual reference may be made to implementation of the apparatus and the method, and repeated parts are not described.

In the descriptions of this application, words such as "first" and "second" are merely used for distinguishing between descriptions, and cannot be understood as an indication or implication of relative importance, or cannot be understood as an indication of implication of an order.

The protocol in this application may be a communication protocol or a specification, for example, a 3GPP communication protocol.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

Unless otherwise specified, "transmission" (transmit/transmission) in embodiments of this application is bidirectional transmission, and includes a sending action and/or a receiving action. Specifically, "transmission" in embodiments of this application includes data sending, data receiving, or data sending and receiving. That is, data transmission herein includes uplink data transmission and/or downlink data transmission. The data may include information and/or a signal. The uplink data transmission is transmission of uplink information and/or an uplink signal, and the downlink data transmission is transmission of downlink information and/or a downlink signal.

In the following, some terms in this application are described, to help a person skilled in the art have a better understanding.

### (1) Dual-connectivity (dual-connectivity, DC) or multi-connectivity (multi-connectivity, MC)

The dual-connectivity or multi-connectivity means that a terminal device may have communication connections to at least two access network devices at the same time, in other words, support at least two access network devices in providing data transmission services for one terminal device at the same time. One access network device is a master base station, where the master base station (which may be referred to as a master station for short) may also be referred to as a master node (master node, MN). Another access network device is a secondary base station, where the secondary base station (which may be referred to as a secondary station for short) may also be referred to as a secondary node (secondary node, SN). The MN may be responsible for exchanging a radio resource control message with the terminal device and interacting with a core network control plane entity. Because the terminal device may receive services of a plurality of cells under one access network device at the same time, a plurality of serving cells managed by the MN form a master cell group (master cell group, MCG), including one primary cell (primary cell, PCell) and one or more optional secondary cells (secondary cells, SCells). A plurality of serving cells managed by the SN form a secondary cell group (secondary cell group, SCG), including one primary secondary cell (primary secondary cell, PScell) and one or more optional SCells. In some scenarios, the MN may also be referred to as the MCG, and the SN may also be referred to as the SCG.

### (2) Fast MCG link recovery (fast MCG link recovery)

When the terminal device detects that an RLF occurs in the MCG, even if the SCG is still communicating with the terminal device normally, the terminal device initiates RRC re-establishment for the MCG and releases an SCG configuration. However, the RRC re-establishment causes a long-time data interruption, for example, a data interruption of 90 to 130 milliseconds (ms). In this application, that the RLF occurs in the MCG may be understood as that the RLF occurs in one or more cells including the PCell in the MCG. That the RLF occurs in the MCG may alternatively be understood as a connection failure between the terminal device and the MCG.

To avoid the RRC re-establishment, a fast MCG link recovery procedure may be used. If the terminal device detects that the RLF occurs in the MCG, the terminal device may indicate link failure information of the MCG to the MN via the SN, and attempt to perform link recovery for the MCG. In other words, the terminal device attempts to recover a connection between the terminal device and the MCG. In the foregoing process, the SCG supports fast recovery of the MCG. To be specific, the terminal device may perform transmission of related information used for the fast recovery of the MCG to the MN via the SN, for example, indicate the link failure information of the MCG.

For example, the terminal device reports the link failure information of the MCG (MCG failure information) to the SCG by using a split (split) signaling radio bearer 1 (signaling radio bearer 1, SRB1) or an SRB3, and starts a T316 timer (timer). If the terminal device receives a handover (handover) message or an RRC release (RRCRelease) message within timing duration of the T316 timer, the fast MCG link recovery succeeds. Otherwise, the terminal device initiates an RRC re-establishment procedure.

The T316 timer is started when the terminal device sends the link failure information of the MCG, and is stopped when the terminal device receives the RRC release (RRCRelease) message, an RRC reconfiguration (including a synchronous reconfiguration) for the primary cell (RRC reconfiguration with reconfiguration with Sync for the PCell) message, or an NR handover command (Mobility From NR Command) message, or when the terminal device initiates an RRC re-establishment procedure (initiating the re-establishment procedure).

A split SRB means splitting of an SRB1/SRB2. To be specific, in a dual-connectivity scenario, an SRB1 and an SRB2 are established between the terminal device and the master base station. To ensure reliability of SRB1/SRB2 transmission, a split SRB mechanism is introduced. To be specific, if link quality between the terminal device and the master base station deteriorates, the SRB 1/SRB2 transmission between the terminal device and the master base station may still be assisted by the secondary base station. In other words, the master base station splits some signaling to the secondary base station, and the secondary base station further sends the signaling to the terminal device.

The SRB3 is a signaling channel directly established between the SN and the terminal device, and may be used for signaling exchange between the SN and the terminal device. SRB3 establishment and release are completed in SN addition and change procedures. SRB3 reconfiguration is completed in an SN modification procedure. When the SCG is released, the SRB3 is released.

The split SRB is configured by the MN in the SN addition and change procedures. An SN configuration part is provided by the SN. The terminal device may configure the split SRB1, the split SRB2, and the SRB3 at the same time. The SRB3 and an SCG branch of the split SRB may be configured independently.

(3) In the descriptions of this application, "at least one (type or item)" means one (type or item) or more (types or items), and "a plurality of (types or items)" means two (types or items) or more (types or items). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In this application, the term "and/or" describes an association relationship between associated objects, and represents that three relationships may exist. For example, A and/or B may represent the following cases: Only A exists, both A and B exist, and only B exists, where A and B may be singular or plural. "/" indicates "or". For example, a/b indicates a or b.

It should be noted that, with continuous development of technologies, the terms in embodiments of this application may change, but all of them shall fall within the protection scope of this application.

To describe the technical solutions in embodiments of this application more clearly, the following describes a communication method and apparatus provided in embodiments of this application in detail with reference to the accompanying drawings.

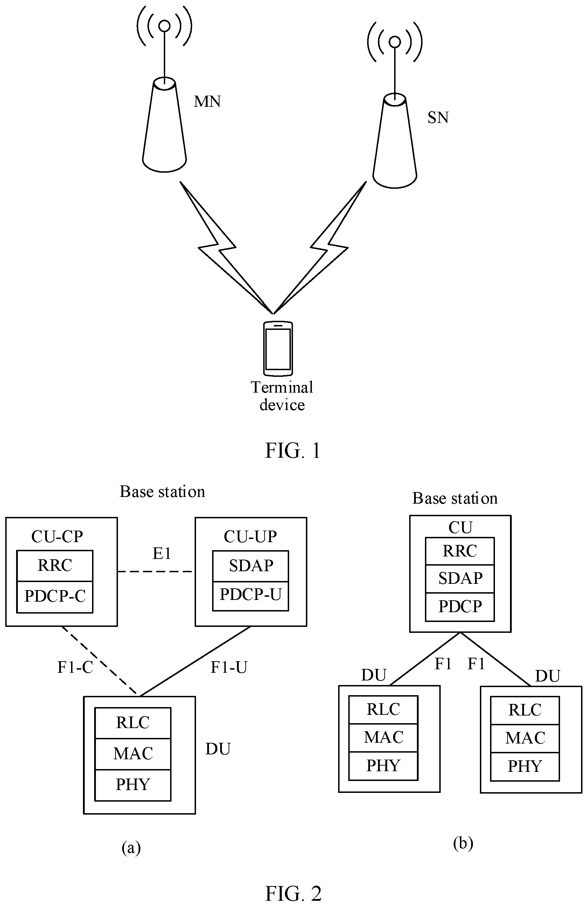

FIG. 1 shows an architecture of a possible communication system to which a communication method according to an embodiment of this application is applicable. The communication system is a dual-connectivity system. The architecture of the communication system may include at least one terminal device and at least two network devices. Only one terminal device and two network devices are used as an example in FIG. 1. The terminal device shown in FIG. 1 establishes DC communication with the two network devices (an MN and an SN).

The network device may be a device having a wireless transceiver function or a chip that may be disposed in the device. The network device may be an access network device such as a base station. For example, the network device may be various base stations, for example, an evolved NodeB (evolved NodeB, eNodeB), a next generation NodeB (next generation NodeB, gNB) in a fifth generation (5th generation, 5G) mobile communication system, a next generation base station in a sixth generation (6th generation, 6G) mobile communication system, or a base station in a future mobile communication system. In addition, the network device may be a home base station (for example, a home evolved NodeB, or a home NodeB, HNB), a baseband unit (baseband unit, BBU), an access point (access point, AP) in a wireless fidelity (wireless fidelity, Wi-Fi) system, integrated access and backhaul (integrated access and backhaul, IAB), a wireless relay node, a wireless backhaul node, a transmission point (transmission and reception point, TRP, or transmission point, TP), or the like. The network device may alternatively be a network node having a base station function, for example, a baseband unit (BBU).

In some deployments, as shown in FIG. 2, a base station (for example, a gNB) may include a central unit (central unit, CU) and a distributed unit (distributed unit, DU). The gNB may further include a radio unit (radio unit, RU). The CU implements some functions of the gNB, and the DU implements some functions of the gNB. In an example, as shown in (a) in FIG. 2, the CU may be divided into a CU control plane (CU-(control plane, CP)) and a CU user plane (CU-(user plane, UP)). The CU-CP is responsible for control plane functions, mainly including a radio resource control (radio resource control, RRC) function and a packet data convergence protocol (packet data convergence protocol, PDCP)-C function. The control plane of the CU CU-CP may further include a further division architecture. To be specific, the existing CU-CP is further divided into a CU-CP1 and a CU-CP2. The CU-CP1 includes various radio resource management functions, and the CU-CP2 includes only the RRC function and the PDCP-C function (namely, a basic function of control plane signaling at a PDCP layer). The CU-UP is responsible for user plane functions, mainly including a service data adaptation protocol (service data adaptation protocol, SDAP) function and a PDCP-U function. The CU-CP and the CU-UP are connected through an E1 interface. The CU-CP means that the CU is connected to a core network through an Ng interface, and connected to the DU through an F1-C (control plane). The CU-UP is connected to the DU through an F1-U (user plane) interface. Certainly, in another possible implementation, the PDCP-C is alternatively in the CU-UP. In another example, as shown in (b) in FIG. 2, a CU implements functions of an RRC layer, a PDCP layer, and an SDAP layer. As shown in FIG. 2, the DU implements functions of a radio link control (radio link control, RLC) layer, a media access control (media access control, MAC) layer, and a physical (physical, PHY) layer. It may be understood that a network device may be a CU node, a DU node, or a device including a CU node and a DU node. In addition, the CU may be classified as a network device in an access network RAN, or the CU may be classified as a network device in a core network CN. This is not limited.

For example, a plurality of DUs may share one CU. In a RAN sharing scenario, one DU may also be connected to a plurality of CUs. The CU and the DU may be connected through an F1 interface. One DU may manage one or more cells, and each cell has a corresponding cell identifier.

In some embodiments, in addition to a case in which the base station includes the CU and the DU, in other words, in addition to a case in which the CU and the DU are deployed together, the CU and the DU may alternatively be physically separated. In other words, the CU and the DU may be considered as two independent nodes. In this case, the network device may be the CU.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. In embodiments of this application, the terminal device is a remote (remote) terminal device, and needs to be provided with a relay (relay) service. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, a smartwatch, a smart headset, or the like), a wireless terminal in a smart home (smart home), or the like. Alternatively, the terminal device may be a chip, a chip module (or a chip system), or the like that may be disposed in the foregoing device. An application scenario is not limited in embodiments of this application. A terminal device with a wireless receiving/sending function and a chip that can be disposed in the terminal device are collectively referred to as the terminal device in this application. The following describes the technical solutions provided in this application by using the UE as an example of the terminal device.

It should be noted that the communication system shown in FIG. 1 may be a fourth generation (The 4th Generation, 4G) communication system, a fifth generation (The 5th Generation, 5G) communication system, a future sixth generation communication system, another evolved communication system, or the like. This is not limited in this application.

Specific steps of a fast MCG link recovery procedure may be as follows:
Step 1: An MN requests an SN to support fast MCG link recovery with a split SRB1 or an SRB3.

The SRB3 is used only when the split SRB1 is not configured.

Step 2: The MN sends a fast recovery configuration (fast recovery configuration) including information about a T316 timer to the UE.

Step 3: The UE detects that an RLF occurs in an MCG, and saves link failure information of the MCG in an RLF report.

When the RLF occurs in the MCG for the first time, the RLF report records a connection failure type as RLF.

Step 4: If transmission of an SCG is not suspended (suspended) and the SN is not performing PScell change or addition, the UE sends the link failure information of the MCG to the SN and starts the T316 timer.

The link failure information of the MCG may include the following information: an MCG/SCG available measurement result, an MCG link fault type, and a non-serving cell available measurement result.

Step 5a: Before the T316 timer expires, if the UE receives a recovery response message sent by the SN, for example, a handover (Handover) message or an RRC release (RRCRelease) message, the UE performs handover or reselection based on the recovery response message. Otherwise, step 5b is performed.

When the UE performs the handover based on the recovery response message, if a handover failure (handover failure, HOF) occurs, an MCG connection failure occurs. When the HOF causes the MCG connection failure, the UE may record the connection failure type as HOF in the RLF report. In other words, in this application, in the RLF report, a type of the RLF that occurs in the MCG (namely, a connection failure type of the MCG) may include the RLF or the HOF.

If the UE receives the recovery response message from the SN before the T316 timer expires, the fast MCG link recovery succeeds. In this case, the UE clears the RLF report recorded in step 3. The UE performs the handover or reselection based on the recovery response message to perform cell change. If the cell change fails or fails soon after the UE accesses a cell, the connection failure (RLF/HOF) occurs again in the MCG, and an RLF report including information about the second MCG connection failure is recorded.

Step 5b: The UE initiates RRC re-establishment.

After the T316 timer expires, if the UE does not receive a recovery response message from the SN, the fast MCG link recovery fails. The RLF report recorded in step 3 is reserved. After the RRC re-establishment, the UE sends the RLF report to an accessed MN.

Currently, the RLF report may include at least one of the following information:
(1) failed primary cell identifier (failedPcellID): indicates information about a cell in which the UE detects that an RLF occurs or information about a target cell in which a handover failure occurs;
(2) connection failure type (connectionFailureType): indicates an RLF, an HOF, or timer expiration (where a timer is a timer started after the UE sends a measurement report, for example, T312);
(3) previous primary cell identifier (previousPCellId): indicates information about a source cell in which the UE receives a handover command at the previous time;
(4) re-establishment cell identifier (reestablishmentCellId): indicates information about a cell to which re-establishment is initiated after a connection failure;
(5) connection failure time (timeConnFailure): indicates duration from time when an HO command is received last time to time when a connection failure occurs;
(6) failure start time (timeSinceFailure): indicates duration recorded since a connection failure occurs, which is usually duration from time when the connection failure occurs to time when an RLF-report is reported; and
(7) RLF cause (rlf-Cause): indicates a cause of a radio link failure or a handover failure, for example, T310 timer expiration, a random access problem (randomAccessProblem), a beam failure recovery failure (beamFailureRecoveryFailure), a listen before talk failure (listen before talk failure, lbtFailure), and excessive RLC retransmission failures.

It should be noted that the foregoing related cell information may include a cell global identifier (cell global identifier, CGI) and/or a physical cell identifier (physical cell identifier, PCI) and a frequency (frequency). In addition, the RLF report may further carry cell quality of each cell, for example, cell quality of a failed cell and/or a neighboring cell when the MCG link failure is detected. Optionally, the cell information may further include a cell measurement result.

Currently, when a connection failure occurs in the MCG, the UE records an RLF report. When the connection failure occurs again in the MCG, the UE clears the previously recorded RLF report and records a latest RLF report.

To reduce problems such as premature handovers, delayed handovers, and ping-pong handovers in handovers such as intra-frequency handovers, inter-frequency handovers, and inter-RAT handovers caused by improper network parameter settings, currently, the communication system supports a mobility robustness optimization (mobility robustness optimization, MRO) mechanism. MRO is an important mechanism of network self-optimization. When a mobility-related exception (such as a handover failure or a radio link failure in a target cell) occurs on the UE, mobility-related exception parameters are reported to a network, a network device may independently analyze and optimize network parameters based on the related parameters reported by the UE. For example, in the existing MRO mechanism, the network device may perform analysis based on the RLF report fed back by the UE, and adjust a network parameter related to the RLF report, to perform mobility optimization for the UE. However, currently, the RLF report recorded by the UE does not consider scenarios such as a fast MCG link recovery failure or a failure after a fast MCG link recovery success. Consequently, when the network device performs network parameter optimization based on the RLF report currently recorded by the UE, a mobility optimization effect is not good.

Embodiments of this application provide a communication method, so that an RLF report determined by UE may be related to whether link recovery for an MCG succeeds. The RLF report may cover parameters in scenarios such as a fast MCG link recovery failure or a failure after a fast MCG link recovery success, so that a network device can accurately adjust the parameters in these scenarios, a mobility optimization effect is improved, and a success rate of subsequent MCG connection re-establishment is further improved. In this way, continuity and reliability of dual-connectivity or multi-connectivity communication performed by the terminal device are enhanced, and communication quality is improved.

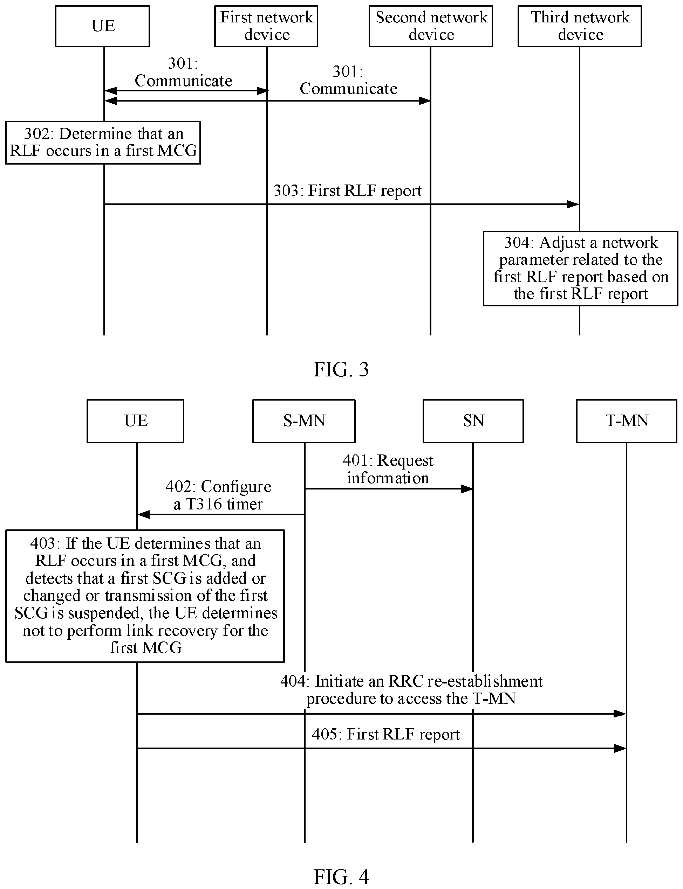

Based on the foregoing descriptions, a communication method provided in embodiments of this application is applicable to the communication system shown in FIG. 1. Refer to FIG. 3. A specific procedure of the method may include the following steps.

Step 301: UE separately communicates with a first network device and a second network device.

Specifically, the UE performs dual-connectivity communication with the first network device and the second network device, and may separately obtain a communication service from the first network device and the second network device. The first network device manages a first MCG, and the second network device manages a first SCG. In other words, the first network device is an MN of the UE, and the second network device is an SN of the UE. An MCG link recovery function is configured for the first SCG. In other words, the first SCG supports MCG fast recovery.

It should be noted that, that the first SCG supports the MCG fast recovery in this application may be understood as that the second network device to which the first SCG belongs supports the MCG fast recovery. To be specific, the UE sends information to the first network device via the second network device to which the first SCG belongs, to perform the MCG fast recovery. In this application, only that the first SCG supports the MCG fast recovery is used for description.

In an optional implementation, the first network device sends request information to the second network device, where the request information is used to request the first SCG managed by the second network device to support the MCG fast recovery. The second network device returns response information of the request information to the first network device. In this way, the MCG link recovery function is configured for the first SCG, so that when an RLF occurs in the first MCG, the UE can perform link recovery for the first MCG by using the first SCG.

Optionally, the request information may be used to request the first SCG to support MCG fast recovery with a split SRB1 or an SRB3.

In an optional implementation, the first network device may configure a first timer for the UE, so that when determining that the RLF occurs in the first MCG, the UE sends RLF information of the first MCG to the second network device by using the first SCG, and then determines, depending on whether a response message sent by the second network device is received within preset duration of the first timer, whether the link recovery for the first MCG succeeds.

Optionally, the first timer may be a T316 timer or the like.

Step 302: The UE determines that the RLF occurs in the first MCG.

That the UE determines that the RLF occurs in the first MCG may be understood as a connection failure between the UE and the first MCG. When the RLF occurs in the first MCG, the UE cannot communicate with the first network device by using the first MCG.

Step 303: The UE sends a first RLF report to a third network device, where the first RLF report is related to whether the link recovery for the first MCG succeeds.

In different cases, content of the first RLF report is different. For example, the following describes the content of the first RLF report for different cases.

Case a1: When the link recovery for the first MCG fails because the UE does not perform the link recovery for the first MCG, the first RLF report may include a cause of a link recovery failure.

Optionally, in the case a1, the cause of the link recovery failure may include one or more of the following: the first SCG is added, the first SCG is changed, or transmission of the first SCG is suspended (SCG transmission suspended). That is, the foregoing cause of the link recovery failure causes the link recovery for the first MCG to fail.

Optionally, that the first SCG is added or changed may mean that a primary secondary cell is being added or changed (Pscell change or addition ongoing).

For example, the cause of the link recovery failure may use an enumeration format, for example, Pscell change or addition ongoing and suspended SCG transmission.

In the case a1, if the first SCG is added or changed or the transmission of the first SCG is suspended, the UE determines not to perform the link recovery for the first MCG. In this case, a link of the first SCG is unstable when the first SCG is added or changed, or the transmission of the first SCG is suspended. Consequently, the UE cannot communicate with the second network device by using the first SCG. Therefore, the UE does not perform the link recovery for the first MCG. Therefore, because the link recovery for the first MCG is not performed, it may be considered that the link recovery for the first MCG fails.

In the case a1, in addition to the foregoing cause of the link recovery failure, the first RLF report may further include, for example, at least one of the seven items included in the RLF report described above. Details are not described herein again.

Case a2: If RLF information of the first MCG fails to be sent to the second network device, the UE determines that the link recovery for the first MCG fails. In the case a2, the first RLF report may include one or more of the following: a cause of a link recovery failure, indication information indicating whether the RLF information of the first MCG is successfully sent to the second network device by using the first SCG, first time information, or RLF information of the first SCG. The first time information indicates first running time of a first timer. The first running time is greater than or equal to preset duration of the first timer, and the first running time is duration from time when the UE sends the RLF information of the first MCG to the second network device by using the first SCG to time when the UE initiates an RRC re-establishment procedure.

The first timer is the first timer configured by the first network device for the UE described in step 301. A meaning of the first timer in the following descriptions is the same as that of the first timer in step 301, and is not described one by one again.

Optionally, the cause of the link recovery failure is related to a problem that occurs in a connection between the UE and the first SCG. Consequently, the UE cannot send the RLF information of the first MCG to the second network device by using the first SCG. For example, the cause of the link recovery failure may be an RLF that occurs in the first SCG. For example, the cause of the link recovery failure may include one or more of the following: the link recovery for the first MCG fails because beam recovery fails after a beam of the first SCG fails (beamFailureRecoveryFailure), random access (randomAccessProblem) for the first SCG fails, or a maximum quantity of radio link control (radio link control, RLC) retransmissions (rlc-MaxNumRetx) for the first SCG is reached. It may alternatively be understood as: that beam recovery fails after a beam of the first SCG fails, random access for the first SCG fails, or a maximum quantity of radio link control retransmissions for the first SCG is reached causes an RLF that occurs in the first SCG, and further causes the link recovery for the first MCG to fail.

Based on a beam failure recovery (beam failure recovery, BFR) technology, after the beam failure of the first SCG, the UE initiates a beam recovery request procedure for the beam failure of the first SCG. If a beam is recovered successfully, it indicates that beam recovery succeeds. If a beam is not recovered, it indicates that beam recovery fails. That the beam recovery fails after the beam of the first SCG fails means that after the beam recovery request procedure initiated by the UE for the beam failure of the first SCG after the beam of the first SCG fails, the beam is not recovered.

For example, the RLF information of the first SCG may include one or more of the following: identification information of the first SCG, a cause of an RLF that occurs in the first SCG, a cause of a change failure in the first SCG (rlf-Cause), or the like. For example, the identification information of the first SCG may include identification information of a primary secondary cell in which the UE detects the RLF or identification information of a primary secondary cell that fails to be changed (failedPSCellId). Optionally, a cause of the RLF that occurs in the first SCG is any one of the foregoing causes for the RLF that occurs in the first SCG, for example, the failure in the random access for the first SCG.

In the case a2, the indication information indicating whether the RLF information of the first MCG is successfully sent to the second network device by using the first SCG may indicate that the RLF information of the first MCG is not successfully sent to the second network device by using the first SCG. Optionally, the indication information indicating whether the RLF information of the first MCG is successfully sent to the second network device by using the first SCG may indicate, by using sending success identifier information, for example, by using a value indicating true or false (true or false) of the sending success identifier information, whether the RLF information of the first MCG is successfully sent. In other words, "true" indicates that the RLF information of the first MCG is successfully sent, and "false" indicates that the RLF information of the first MCG is not successfully sent. That is, in the case a2, the value of the success identifier information is "false". For example, the success identifier information may include one bit. A value "1" of the bit may indicate that the value of the success identifier information is "true", and a value "0" of the bit may indicate that the value of the success identifier information is "false".

Case a3: The UE sends RLF information of the first MCG to the second network device by using the first SCG. If a response message for the RLF information of the first MCG is not received within first preset duration, the UE determines that the link recovery for the first MCG fails. In the case a3, content of the first RLF report is similar to the content of the first RLF report described in the foregoing case a2, and mutual reference may be made to each other. Details are not described herein again.

The first preset duration may be the preset duration of the first timer.

It should be noted that, different from the case a2, the indication information that is included in the first RLF report and that indicates whether the RLF information of the first MCG is successfully sent to the second network device by using the first SCG may indicate that the RLF information of the first MCG is successfully sent to the second network device by using the first SCG. For example, if the indication information is the foregoing success identifier information, in the case a3, a value of the success identifier information is true.

For example, in the foregoing case a2 and case a3, the first RLF report may further include, for example, at least one of the seven items included in the RLF report described above. Details are not described herein again.

The foregoing cases a1 to a3 are scenarios in which the link recovery for the first MCG fails. When the link recovery for the first MCG succeeds, the UE further determines whether the UE is successfully handed over from the first MCG to a second MCG, in other words, whether an MN handover performed by the UE succeeds, or whether the UE is successfully handed over from the first network device to a target network device (namely, a target MN), where the second MCG is an MCG managed by the target network device. Further, the UE may determine the content of the first RLF report depending on whether the UE is successfully handed over from the first MCG to the second MCG.

Optionally, when the UE receives, within the preset duration of the first timer, a response message sent by the second network device, it is determined that the link recovery for the first MCG succeeds. For example, when the UE receives a handover command or an RRC release message from the second network device by using the first SCG within the preset duration of the first timer, it indicates that the link recovery for the first MCG succeeds. Optionally, the handover command may be any one of the following: an NR handover command (MobilityFromNRCommand), an evolved universal terrestrial radio access (evolved universal terrestrial radio access, EUTRA) handover command (MobilityFromEUTRACommand), and a synchronous reconfiguration (Reconfiguration with sync).

In an optional example, when a handover failure occurs when the UE is handed over from the first MCG to the second MCG, it indicates that the UE is not successfully handed over from the first MCG to the second MCG.

In an optional example, that the UE determines that the UE is not successfully handed over from the first MCG to the second MCG may include: If an RLF occurs in the second MCG within second preset duration after the UE is handed over to the second MCG, the UE determines that the UE is not successfully handed over from the first MCG to the second MCG. In other words, if the RLF failure occurs in the second MCG soon after the UE is handed over to the second MCG, it indicates that the UE is not successfully handed over from the first MCG to the second MCG.

That the RLF occurs in the second MCG may be understood as a connection failure between the UE and the second MCG.

For example, depending on whether the UE is successfully handed over from the first MCG to the second MCG, the RLF report may be shown in the following case a4 and case a5.

Case a4: When the UE is not successfully handed over from the first MCG to the second MCG, the first RLF report may include RLF information of the first MCG, and handover failure information of the second MCG or RLF information of the second MCG.

For example, in the case a4, content of the first RLF report may include related information about first (first) occurrence of the RLF in an MCG (which may also be referred to as a first failure) and related information about last (last) occurrence of the RLF in the MCG (which may also be referred to as a second failure). The first occurrence of the RLF in the MCG means that the RLF occurs in the first MCG, and the last occurrence of the RLF in the MCG means that a handover from the first MCG to the second MCG fails or the RLF occurs in the second MCG. For example, the content of the first RLF report may include one or more of the following: (1) first failedCellId: an identifier of a cell in which the first failure occurs, for example, an identifier A1 of a PCell of the first MCG; (2) first connectionFailureType: a connection failure type of the first failure, where for example, the connection failure type is an RLF; (3) first previousCellId: an identifier of a source cell in which the UE receives a handover command at the previous time when the first failure occurs; (4) last failedCellId: an identifier of a cell in which the last failure occurs, for example, an identifier A2 of a PCell of the second MCG; (5) last connectionFailureType: a connection failure type of the last failure, where for example, the connection failure type is an HOF or RLF; and (6) last previousCellId: an identifier of a source cell in which the UE receives a handover command at the previous time when the last failure occurs, for example, an identifier B1 of a PScell of the first SCG.

The foregoing items (1) to (3) belong to the RLF information of the first MCG, and the foregoing items (4) to (6) belong to the handover failure information of the second MCG or the RLF information of the second MCG. The A1, B1, and A2 are merely examples of cell identifiers, and are not intended to limit this application.

In the case a4, may not clear the RLF report previously recorded when the RLF occurs in the first MCG.

Optionally, the first RLF report may further include second time information. The second time information indicates second running time of a first timer. The second running time is less than preset duration of the first timer, and the second running time is duration from time when the UE sends the RLF information of the first MCG to the second network device by using the first SCG to time when the UE receives a response message sent by the second network device. That the second running time is less than the preset duration of the first timer indicates that after being started, the first timer is stopped before the first timer expires.

Case a5: When the UE is successfully handed over from the first MCG to the second MCG, the first RLF report may include RLF information of the first MCG and one or more of the following: identification information of the second MCG or second time information. For the second time information, refer to the descriptions of the second time information in the case a4. For the RLF information of the first MCG, refer to the foregoing descriptions. Details are not described herein again.

Optionally, the identification information of the second MCG may be recorded in the first RLF report in the following manners.

Manner 1: Reuse a re-establishment cell identifier field (reestablishmentCellId) and/or add a new re-establishment cell identifier field (reestablishmentCellIdtype) to indicate a recorded cell identifier of a re-establishment cell, a handover target cell, or a reselected cell, for example, a cell identifier A2 of the handover target cell.

Manner 2: Add a handover target cell field and/or a reselected cell field to record a cell identifier. For example, the handover target cell field is added to record a cell identifier A2 of a handover target cell.

In the case a5, may not clear the RLF report previously recorded when the RLF occurs in the first MCG.

The first RLF report in the foregoing five cases may cover parameters related to the link recovery for the first MCG in a plurality of scenarios such as a fast MCG link recovery failure or a failure after a fast MCG link recovery success, so that a network device can subsequently accurately adjust a network parameter related to the link recovery for the MCG, to improve a mobility optimization effect. The mobility optimization effect includes: increasing a success rate of subsequent link recovery for the MCG, or increasing a success rate of changing the UE from the first MCG to another MCG. For example, in the foregoing case a1, after performing link failure cause analysis based on the first RLF report, the network device may determine that the link recovery of the first MCG fails not because a related parameter configured for the link recovery for the first MCG is improper. In this case, parameter optimization may not be performed. For another example, in the foregoing cases a2 and a3, the network device may optimize a configuration parameter of the first SCG, to reduce occurrence of the RLF in the first SCG subsequently, so that the UE can successfully communicate with the second network device to which the first SCG belongs. For another example, in the foregoing case a4, the network device may adjust an MCG to which the UE needs to be handed over, in other words, hand over the UE from the first MCG to another more suitable MCG than the second MCG, to improve a handover success rate. For another example, in the foregoing case a5, the network device may optimize, based on the first RLF report, a related parameter for the handover from the first MCG to the second MCG, and make the UE to be handed over from the first MCG to the second MCG quickly, to reduce MCG service interruption time.

Step 304: The third network device adjusts a network parameter related to the first RLF report based on the first RLF report.

For related descriptions of adjusting the network parameter related to the first RLF report, refer to related descriptions in step 303. Details are not described herein again.

Optionally, the third network device may send an adjusted network parameter to another network device through an interface between network devices, so that the adjusted network parameter can be used for link recovery for the MCG between the another network device and the UE, to improve a success rate of the link recovery for the MCG. For example, as a target master base station in a handover process of the UE, the third network device may send the adjusted network parameter to a source master base station.

In an optional implementation, in the foregoing cases a1 to a4, the UE may initiate RRC re-establishment to access the network device, and then the UE sends the first RLF report to the third network device.

In another optional implementation, in the foregoing case a3, the UE may perform handover to or reselect a network device to access the network device, and then the UE sends the first RLF report to the third network device.

The third network device may be the first network device, or may be a network device other than the first network device. For example, the UE performs handover from the first network device to the third network device, in other words, the third network device is a target network device in a handover scenario. This is not limited in this application. It should be noted that, when the RLF occurs in the first SCG managed by the second network device, the third network device may alternatively be the second network device.

Optionally, that the third network device receives the first RLF report from the UE may be that the third network device receives the first RLF report from the UE via another network device, where the another network device is a network device currently accessed by the UE. In other words, the UE first sends the first RLF report to the another network device (namely, the network device currently accessed by the UE), and then the another network device forwards the first RLF report to the third network device. In this case, the third network device is not the network device currently accessed by the UE.

Optionally, the third network device may be the network device currently accessed by the UE. In this case, the third network device may directly receive the first RLF report from the UE.

For example, when the third network device is the first network device, the third network device may adjust the network parameter related to the first RLF report based on the first RLF report. In this case, when the UE still accesses the first network device, the first network device directly obtains the first RLF report from the UE. Alternatively, when the UE is already handed over from the first network device to another network device, the first network device may obtain the first RLF report from the another network device.

For example, when the third network device is not the first network device, the third network device may adjust the network parameter related to the first RLF report based on the first RLF report, and send related information about an adjusted network parameter to the first network device and/or the second network device.

According to the method provided in this embodiment of this application, the UE may report the RLF report related to whether the link recovery for the MCG succeeds, to improve the mobility optimization effect and further improve a success rate of subsequent MCG connection re-establishment. In this way, continuity and reliability of dual-connectivity or multi-connectivity communication performed by the terminal device are enhanced, and communication quality is improved.

Based on the foregoing embodiments, the following describes in detail, by using specific examples, the communication method provided in embodiments of this application. In the following examples, an example in which the UE and the first network device each are a source MN (source MN, S-MN), in other words, the S-MN manages the first MCG, the second network device is an SN, in other words, the SN manages the first SCG, the third network device is a target MN (target MN, T-MN), and the first timer is a T316 timer is used for description.

FIG. 4 shows an example of a communication method. In this example, after a T316 timer is configured for UE, an RLF occurs in a first MCG, the UE does not initiate a link recovery procedure for the first MCG (in other words, does not initiate a fast MCG link recovery procedure), and a cause of a link recovery failure is newly recorded in an RLF report. For example, a specific procedure of the example may include the following steps.

Step 401: An S-MN sends request information to an SN, where the request information be used to request the SN to support MCG fast recovery with a split SRB1 or an SRB3.

Step 402: The S-MN configures the T316 timer for the UE.

Step 403: If the UE determines that the RLF occurs in the first MCG, and detects that a first SCG is added or changed or transmission of a first SCG is suspended, the UE determines not to perform link recovery for the first MCG.

In other words, the UE cannot initiate the fast MCG link recovery procedure.

Specifically, if the UE detects that the RLF occurs in the first MCG, to initiate the fast MCG link recovery procedure, the UE needs to indicate RLF information of the first MCG to the S-MN by using the first SCG. In a case of step 403, transmission between the first SCG and the UE is interrupted. When perceiving this case, the UE does not initiate the fast MCG link recovery procedure.

Step 404: The UE initiates an RRC re-establishment procedure to access a T-MN.

Step 405: The UE sends a first RLF report to the T-MN.

Optionally, the T-MN may then send the first RLF report to the S-MN, so that the S-MN adjusts a related network parameter based on the first RLF report.

For the first RLF report, refer to the first RLF report in the case a1 in the embodiment shown in FIG. 3. Details are not described herein again.

In the foregoing example, a scenario in which the UE does not initiate the fast MCG link recovery procedure is considered. Therefore, the RLF report is enhanced based on the scenario, so that a network device analyzes a cause of a fast MCG link recovery failure, and it can be learned that the fast MCG link recovery fails not because a configuration parameter for the fast MCG link recovery is improper, but because a mobility-related parameter of the SCG is improperly configured.

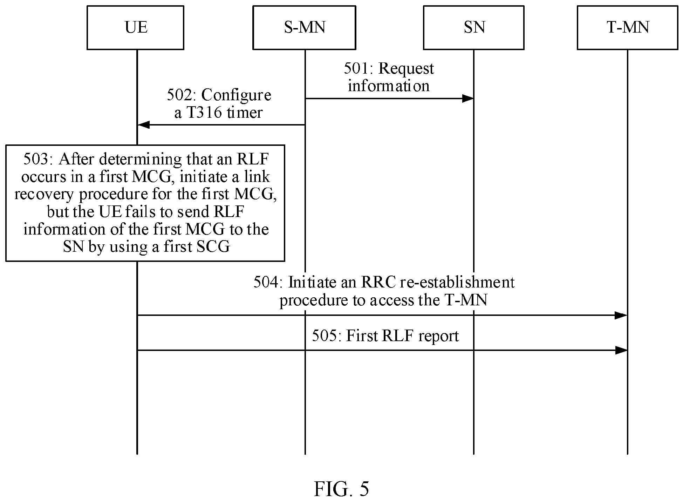

FIG. 5 shows another example of a communication method. In this example, after a T316 timer is configured for UE, an RLF occurs in a first MCG, a failure occurs in a link recovery procedure initiated by the UE for the first MCG (in other words, an initiated fast MCG link recovery procedure), and process information of a link recovery failure is newly recorded in an RLF report. For example, a specific procedure of the example may include the following steps.

Step 501: An S-MN sends request information to an SN, where the request information be used to request the SN to support MCG fast recovery with a split SRB1 or an SRB3.

Step 502: The S-MN configures the T316 timer for the UE.

Step 503: After determining that the RLF occurs in the first MCG, the UE initiates the link recovery procedure for the first MCG, but the UE fails to send RLF information of the first MCG to the SN by using a first SCG.

Optionally, a cause of a failure in sending the RLF information of the first MCG by the UE to the SN by using the first SCG may be that an RLF occurs in the first SCG, or that the UE fails to randomly access the first SCG when the first SCG is deactivated.

Step 504: The UE initiates an RRC re-establishment procedure to access a T-MN.

Step 505: The UE sends a first RLF report to the T-MN.

Optionally, the T-MN may then send the first RLF report to the S-MN, so that the S-MN adjusts a related network parameter based on the first RLF report.

For the first RLF report, refer to the first RLF report in the case a2 in the embodiment shown in FIG. 3. Details are not described herein again.

In the foregoing example, a scenario in which the failure occurs in the fast MCG link recovery procedure initiated by the UE is considered. Therefore, the RLF report is enhanced based on the scenario, so that a network device can optimize the fast MCG link recovery procedure, for example, can optimize a configuration parameter of the SCG. Because the SCG is configured to send the RLF information of the first MCG, after the configuration parameter of the SCG is optimized, occurrence of the RLF in the SCG can be reduced subsequently, so that the UE can successfully communicate with the SN.

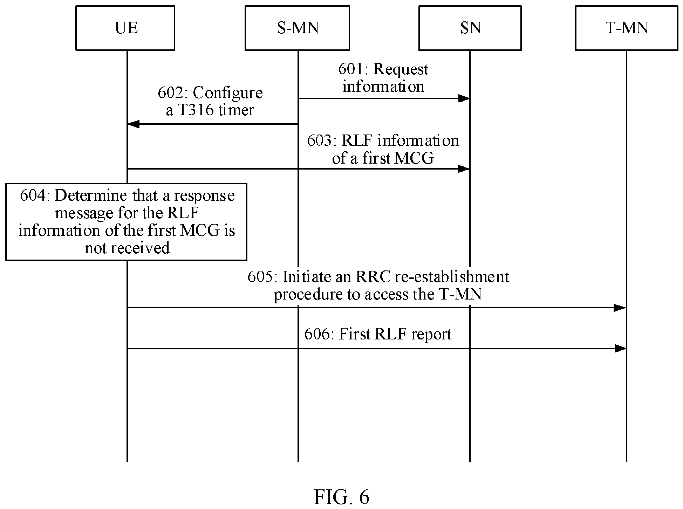

FIG. 6 shows another example of a communication method. In this example, after a T316 timer is configured for UE, an RLF occurs in a first MCG, a failure occurs in a link recovery procedure initiated by the UE for the first MCG (in other words, an initiated fast MCG link recovery procedure), and process information of a link recovery failure is newly recorded in an RLF report. For example, a specific procedure of the example may include the following steps.

Step 601: An S-MN sends request information to an SN, where the request information be used to request the SN to support MCG fast recovery with a split SRB1 or an SRB3.

Step 602: The S-MN configures the T316 timer for the UE.

Step 603: After determining that the RLF occurs in the first MCG, the UE initiates the link recovery procedure for the first MCG, and sends RLF information of the first MCG to the SN by using a first SCG.

Step 604: The UE determines that a response message for the RLF information of the first MCG is not received.

After the SN receives the RLF information of the first MCG, an RLF occurs in the first SCG. Consequently, the UE does not receive the response message for the RLF information of the first MCG within preset duration of the T316 timer.

Step 605: The UE initiates an RRC re-establishment procedure to access a T-MN.

Step 606: The UE sends a first RLF report to the T-MN.

Optionally, the T-MN may then send the first RLF report to the S-MN, so that the S-MN adjusts a related network parameter based on the first RLF report.

For the first RLF report, refer to the first RLF report in the case a3 in the embodiment shown in FIG. 3. Details are not described herein again.

In the foregoing example, a scenario in which the failure occurs in the fast MCG link recovery procedure initiated by the UE is considered. Therefore, the RLF report is enhanced based on the scenario, so that a network device can optimize the fast MCG link recovery procedure, for example, can optimize a configuration parameter of the SCG. Because the SCG is configured to send the RLF information of the first MCG, after the configuration parameter of the SCG is optimized, occurrence of the RLF in the SCG can be reduced subsequently, so that the UE can successfully communicate with the SN to which the SCG belongs.

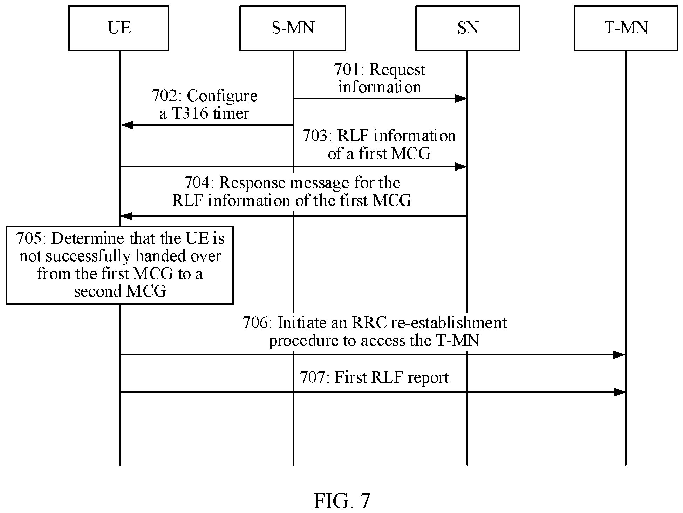

FIG. 7 shows another example of a communication method. In this example, after a T316 timer is configured for UE, an RLF occurs in a first MCG, a link recovery procedure initiated by the UE for the first MCG succeeds (in other words, an initiated fast MCG link recovery procedure succeeds), but the UE has an RLF in a second MCG, and connection failure information of the second MCG is newly recorded in an RLF report. In this example, the second MCG is not an MCG managed by a T-MN, but is an MCG that is managed by an MN and to which the UE needs to be handed over when the link recovery procedure for the first MCG succeeds. However, in this example, because the UE is not successfully handed over to the second MCG, the UE then accesses the T-MN by using an RRC re-establishment procedure. For example, a specific procedure of the example may include the following steps.

Step 701: An S-MN sends request information to an SN, where the request information be used to request the SN to support MCG fast recovery with a split SRB1 or an SRB3.

Step 702: The S-MN configures the T316 timer for the UE.

Step 703: After determining that the RLF occurs in the first MCG, the UE initiates the link recovery procedure for the first MCG, and sends RLF information of the first MCG to the SN by using a first SCG.

Step 704: The UE receives a response message for the RLF information of the first MCG from the SN by using the first SCG, to indicate the UE to perform handover from the first MCG to the second MCG.

For example, the response message for the RLF information of the first MCG may be a handover command.

Step 705: The UE determines that the UE is not successfully handed over from the first MCG to the second MCG.

For example, for details about that the UE is not successfully handed over from the first MCG to the second MCG, refer to the case in which the UE is not successfully handed over from the first MCG to the second MCG in the embodiment shown in FIG. 3. Details are not described herein again.

Step 706: The UE initiates the RRC re-establishment procedure to access the T-MN.

Step 707: The UE sends a first RLF report to the T-MN.

Optionally, the T-MN may then send the first RLF report to the S-MN, so that the S-MN adjusts a related network parameter based on the first RLF report.

For the first RLF report, refer to the first RLF report in the case a4 in the embodiment shown in FIG. 3. Details are not described herein again.

In the foregoing example, a scenario in which the RLF failure occurs in the second MCG after the fast MCG link recovery procedure initiated by the UE succeeds is considered. Therefore, the RLF report is enhanced based on the scenario, so that a network device can optimize a subsequent procedure of the fast MCG link recovery procedure. For example, an MCG to which the UE needs to be handed over may be adjusted, in other words, the terminal device may be handed over from the first MCG to another more suitable MCG than the second MCG, to improve a handover success rate.

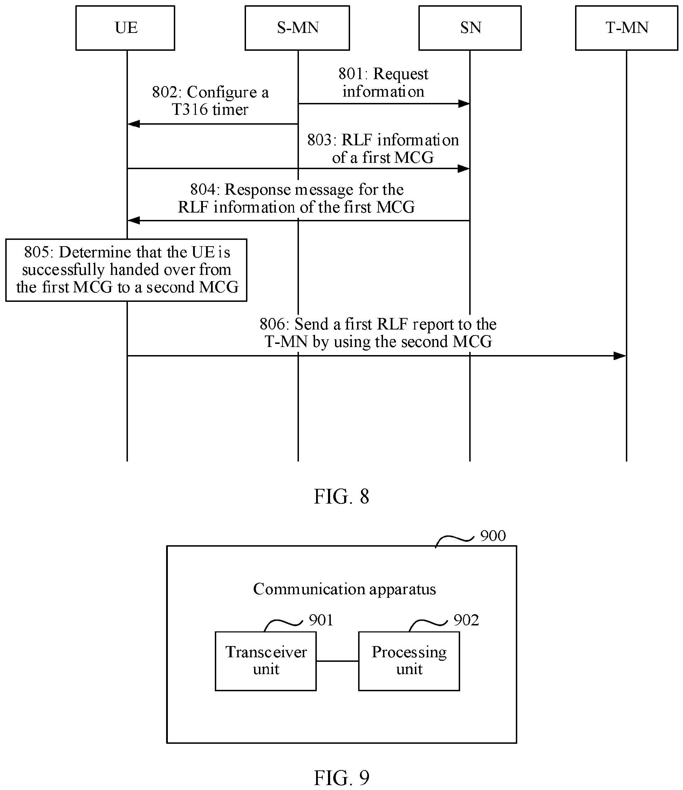

FIG. 8 shows another example of a communication method. In this example, after a T316 timer is configured for UE, an RLF occurs in a first MCG, a link recovery procedure initiated by the UE for the first MCG succeeds (in other words, an initiated fast MCG link recovery procedure succeeds), and related information about a second MCG after handover is newly recorded in an RLF report. For example, a specific procedure of the example may include the following steps.

Step 801: An S-MN sends request information to an SN, where the request information be used to request the SN to support MCG fast recovery with a split SRB1 or an SRB3.

Step 802: The S-MN configures the T316 timer for the UE.

Step 803: After determining that the RLF occurs in the first MCG, the UE initiates the link recovery procedure for the first MCG, and sends RLF information of the first MCG to the SN by using a first SCG.

Step 804: The UE receives a response message for the RLF information of the first MCG from the SN by using the first SCG, to indicate the UE to perform handover from the first MCG to the second MCG.

For example, the response message for the RLF information of the first MCG may be a handover command (MobilityFromNRCommand, MobilityFromEUTRACommand, and Reconfiguration with sync), or may be an RRC release message.

Step 805: The UE determines that the UE is successfully handed over from the first MCG to the second MCG.

Step 806: The UE sends a first RLF report to a T-MN by using the second MCG.

In this example, the T-MN is an MN that manages the second MCG.

Optionally, the T-MN may then send the first RLF report to the S-MN, so that the S-MN adjusts a related network parameter based on the first RLF report.

For the first RLF report, refer to the first RLF report in the case a5 in the embodiment shown in FIG. 3. Details are not described herein again.

In the foregoing example, a scenario in which the fast MCG link recovery procedure initiated by the UE succeeds and the UE is handed over to the second MCG is considered. Therefore, the RLF report is enhanced based on the scenario, so that a network device can optimize the fast MCG link recovery procedure. For example, the network device may optimize, based on the RLF report, a related parameter for the handover from the first MCG to the second MCG, and make the UE to be handed over from the first MCG to the second MCG quickly, to reduce MCG service interruption time.

Based on the foregoing embodiments, an embodiment of this application further provides a communication apparatus. Refer to FIG. 9. A communication apparatus 900 may include a transceiver unit 901 and a processing unit 902. The transceiver unit 901 is used by the communication apparatus 900 to receive information (a message or data) or send information (a message or data), and the processing unit 902 is configured to control and manage an action of the communication apparatus 900. The processing unit 902 may further control a step performed by the transceiver unit 901.

For example, the communication apparatus 900 may be specifically the network device (for example, the first network device, the second network device, or the third network device) in the foregoing embodiments, a processor in the network device, a chip, a chip system, a functional module, or the like. Alternatively, the communication apparatus 900 may be specifically the terminal device (for example, the UE) in the foregoing embodiments, a processor in the terminal device, a chip, a chip system, a functional module, or the like.

In an embodiment, when the communication apparatus 900 is configured to implement a function of the terminal device (for example, the UE) in the embodiments in FIG. 3 to FIG. 8, the transceiver unit 901 may be configured to separately communicate with the first network device and the second network device, where the first network device manages a first master cell group MCG, the second network device manages a first secondary cell group SCG, and an MCG link recovery function is configured for the first SCG; the processing unit 902 may be configured to determine that a radio link failure RLF occurs in the first MCG; and the transceiver unit 901 may be further configured to send a first RLF report to the third network device, where the first RLF report is related to whether link recovery for the first MCG succeeds.

In an optional implementation, when the link recovery for the first MCG fails, the first RLF report includes a cause of a link recovery failure.

For example, the cause of the link recovery failure may include one or more of the following: the first SCG is added, the first SCG is changed, or transmission of the first SCG is suspended.

Optionally, if the first SCG is added or changed or the transmission of the first SCG is suspended, the processing unit 902 may be further configured to determine not to perform the link recovery for the first MCG.

In another optional implementation, if RLF information of the first MCG fails to be sent to the second network device, the processing unit 902 may be further configured to determine that the link recovery for the first MCG fails.

In still another optional implementation, the transceiver unit 901 may be further configured to send RLF information of the first MCG to the second network device by using the first SCG. If the transceiver unit 901 does not receive a response message for the RLF information of the first MCG within first preset duration, the processing unit 902 may be further configured to determine that the link recovery for the first MCG fails.

For example, the first RLF report may include one or more of the following: a cause of a link recovery failure, indication information indicating whether the RLF information of the first MCG is successfully sent to the second network device by using the first SCG, first time information, or RLF information of the first SCG. The first time information indicates first running time of a first timer. The first running time is greater than or equal to preset duration of the first timer, and the first running time is duration from time when the terminal device sends the RLF information of the first MCG to the second network device by using the first SCG to time when the terminal device initiates an RRC re-establishment procedure.

Optionally, the cause of the link recovery failure includes one or more of the following: the link recovery for the first MCG fails because beam recovery fails after a beam of the first SCG fails, random access for the first SCG fails, or a maximum quantity of radio link control RLC retransmissions for the first SCG is reached.

Optionally, the RLF information of the first SCG includes one or more of the following: identification information of the first SCG, a cause of an RLF that occurs in the first SCG, or a cause of a change failure in the first SCG.

In a possible manner, when the link recovery for the first MCG succeeds, the processing unit 902 may be further configured to: determine whether the terminal device is successfully handed over from the first MCG to a second MCG, and determine the first RLF report depending on whether the terminal device is successfully handed over from the first MCG to the second MCG.

In an example, when the terminal device is not successfully handed over from the first MCG to the second MCG, the first RLF report includes RLF information of the first MCG, and handover failure information of the second MCG or RLF information of the second MCG.

Optionally, when determining that the terminal device is not successfully handed over from the first MCG to the second MCG, if an RLF occurs in the second MCG within second preset duration after the terminal device is handed over to the second MCG, the processing unit 902 may be configured to determine that the terminal device is not successfully handed over from the first MCG to the second MCG.

In another example, when the terminal device is successfully handed over from the first MCG to the second MCG, the first RLF report includes RLF information of the first MCG and one or more of the following: identification information of the second MCG or second time information. The second time information indicates second running time of a first timer. The second running time is less than preset duration of the first timer, and the second running time is duration from time when the terminal device sends the RLF information of the first MCG to the second network device by using the first SCG to time when the terminal device receives a response message sent by the second network device.

In an embodiment, when the communication apparatus 900 is configured to implement a function of the third network device in the embodiments in FIG. 3 to FIG. 8, the transceiver unit 901 may be configured to receive a first RLF report from the terminal device, where the first RLF report is related to whether link recovery for a first master cell group MCG succeeds after an RLF occurs in the first MCG; and the processing unit 902 may be configured to adjust a network parameter related to the first RLF report based on the first RLF report. The terminal device separately communicates with a first network device and a second network device, where the first network device manages the first master cell group MCG, the second network device manages a first secondary cell group SCG, and an MCG link recovery function is configured for the first SCG.

In an optional implementation, when the link recovery for the first MCG fails, the first RLF report includes a cause of a link recovery failure.

For example, the cause of the link recovery failure includes one or more of the following: the first SCG is added, the first SCG is changed, or transmission of the first SCG is suspended.

In another optional implementation, when the link recovery for the first MCG fails, the first RLF report includes one or more of the following: a cause of a link recovery failure, indication information indicating whether RLF information of the first MCG is successfully sent to the second network device by using the first SCG, first time information, or RLF information of the first SCG. The first time information indicates first running time of a first timer. The first running time is greater than or equal to preset duration of the first timer, and the first running time is duration from time when the terminal device sends the RLF information of the first MCG to the second network device by using the first SCG to time when the terminal device initiates an RRC re-establishment procedure.

Optionally, the cause of the link recovery failure includes one or more of the following: the link recovery for the first MCG fails because beam recovery fails after a beam of the first SCG fails, random access for the first SCG fails, or a maximum quantity of radio link control RLC retransmissions for the first SCG is reached.

Optionally, the RLF information of the first SCG includes one or more of the following: identification information of the first SCG, a cause of an RLF that occurs in the first SCG, or a cause of a change failure in the first SCG.

In a possible manner, when the link recovery for the first MCG succeeds, the first RLF report is further related to whether the terminal device is successfully handed over from the first MCG to a second MCG.

In an example, when the terminal device is not successfully handed over from the first MCG to the second MCG, the first RLF report includes RLF information of the first MCG, and handover failure information of the second MCG or RLF information of the second MCG.

In another example, when the terminal device is successfully handed over from the first MCG to the second MCG, the first RLF report includes RLF information of the first MCG and one or more of the following: identification information of the second MCG or second time information. The second time information indicates second running time of a first timer. The second running time is less than preset duration of the first timer, and the second running time is duration from time when the terminal device sends the RLF information of the first MCG to the second network device by using the first SCG to time when the terminal device receives a response message sent by the second network device.

It should be noted that, in this embodiment of this application, division into the units is an example, and is merely logical function division. In actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

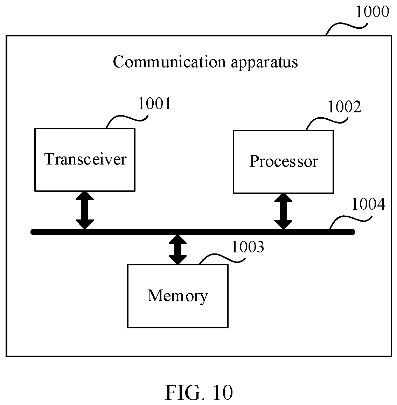

Based on the foregoing embodiments, an embodiment of this application further provides a communication apparatus. Refer to FIG. 10. A communication apparatus 1000 may include a transceiver 1001 and a processor 1002. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive and send information, a message, data, or the like.

Specifically, the processor 1002 may be a central processing unit (central processing unit, CPU), a network processor (network processor, NP), or a combination of a CPU and an NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The transceiver 1001, the processor 1002, and the memory 1003 are interconnected. Optionally, the transceiver 1001, the processor 1002, and the memory 1003 are interconnected through a bus 1004. The bus 1004 may be a peripheral component interconnect (Peripheral Component Interconnect, PCI) bus, an extended industry standard architecture (Extended Industry Standard Architecture, EISA) bus, or the like. The bus can be divided into an address bus, a data bus, a control bus, and the like. For ease of representation, the bus is represented by using only one bold line in FIG. 10. However, it does not indicate that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes the application program stored in the memory 1003, to implement the foregoing function, thereby implementing a function of the communication apparatus 1000.

For example, the communication apparatus 1000 may be the network device (the first network device, the second network device, or the third network device) in the foregoing embodiments, or may be the terminal device in the foregoing embodiments.

In an embodiment, when the communication apparatus 1000 implements a function of the terminal device in the embodiments shown in FIG. 3 to FIG. 8, the transceiver 1001 may implement receiving and sending operations performed by the terminal device in the embodiments shown in FIG. 3 to FIG. 8; and the processor 1002 may implement operations other than the receiving and sending operations performed by the terminal device in the embodiments shown in FIG. 3 to FIG. 8. Specifically, for related specific descriptions, refer to related descriptions in the embodiments shown in FIG. 3 to FIG. 8. Details are not described herein again.

In an embodiment, when the communication apparatus 1000 implements a function of the third network device in the embodiments shown in FIG. 3 to FIG. 8, the transceiver 1001 may implement receiving and sending operations performed by the third network device in the embodiments shown in FIG. 3 to FIG. 8; and the processor 1002 may implement operations other than the receiving and sending operations performed by the third network device in the embodiments shown in FIG. 3 to FIG. 8. Specifically, for related specific descriptions, refer to related descriptions in the embodiments shown in FIG. 3 to FIG. 8. Details are not described herein again.

Based on the foregoing embodiments, an embodiment of this application provides a communication system. The communication system may include the terminal device, the first network device, the second network device, the third network device, and the like in the foregoing embodiments.

An embodiment of this application further provides a computer-readable storage medium. The computer-readable storage medium is configured to store a computer program. When the computer program is executed by a computer, the computer may implement the communication methods provided in the method embodiments.

An embodiment of this application further provides a computer program product. The computer program product is configured to store a computer program. When the computer program is executed by a computer, the computer may implement the communication methods provided in the method embodiments.

An embodiment of this application further provides a chip, including a processor. The processor is coupled to a memory, and is configured to invoke a program in the memory, so that the chip implements the communication methods provided in the method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that in embodiments of this application, the terminal and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, comprising:
separately communicating with, by a terminal device, a first network device and a second network device, wherein the first network device manages a first master cell group MCG, the second network device manages a first secondary cell group SCG, and an MCG link recovery function is configured for the first SCG;
determining, by the terminal device, that a radio link failure RLF occurs in the first MCG; and
sending, by the terminal device, a first RLF report to a third network device, wherein the first RLF report is related to whether link recovery for the first MCG succeeds.

2. The method according to claim 1, wherein when the link recovery for the first MCG fails, the first RLF report comprises a cause of a link recovery failure.

3. The method according to claim 2, wherein the cause of the link recovery failure comprises one or more of the following: the first SCG is added, the first SCG is changed, or transmission of the first SCG is suspended.

4. The method according to claim 2 or 3, wherein the method further comprises: if the first SCG is added or changed or the transmission of the first SCG is suspended, determining, by the terminal device, not to perform the link recovery for the first MCG.

5. The method according to claim 1, wherein the method further comprises: if RLF information of the first MCG fails to be sent to the second network device, determining, by the terminal device, that the link recovery for the first MCG fails.

6. The method according to claim 1, wherein the method further comprises:
sending, by the terminal device, RLF information of the first MCG to the second network device by using the first SCG; and
if a response message for the RLF information of the first MCG is not received within first preset duration, determining, by the terminal device, that the link recovery for the first MCG fails.

7. The method according to claim 5 or 6, wherein the first RLF report comprises one or more of the following: a cause of a link recovery failure, indication information indicating whether the RLF information of the first MCG is successfully sent to the second network device by using the first SCG, first time information, or RLF information of the first SCG, wherein the first time information indicates first running time of a first timer, wherein the first running time is greater than or equal to preset duration of the first timer, and the first running time is duration from time when the terminal device sends the RLF information of the first MCG to the second network device by using the first SCG to time when the terminal device initiates a radio resource control RRC re-establishment procedure.

8. The method according to claim 7, wherein the cause of the link recovery failure comprises one or more of the following: the link recovery for the first MCG fails because beam recovery fails after a beam of the first SCG fails, random access for the first SCG fails, or a maximum quantity of radio link control RLC retransmissions for the first SCG is reached.

9. The method according to claim 7, wherein the RLF information of the first SCG comprises one or more of the following: identification information of the first SCG, a cause of an RLF that occurs in the first SCG, or a cause of a change failure in the first SCG.

10. The method according to claim 1, wherein when the link recovery for the first MCG succeeds, the method further comprises:
determining, by the terminal device, whether the terminal device is successfully handed over from the first MCG to a second MCG; and
determining, by the terminal device, the first RLF report depending on whether the terminal device is successfully handed over from the first MCG to the second MCG.

11. The method according to claim 10, wherein when the terminal device is not successfully handed over from the first MCG to the second MCG, the first RLF report comprises RLF information of the first MCG, and handover failure information of the second MCG or RLF information of the second MCG.

12. The method according to claim 10 or 11, wherein that the terminal device is not successfully handed over from the first MCG to the second MCG comprises:
if an RLF occurs in the second MCG within second preset duration after the terminal device is handed over to the second MCG, determining, by the terminal device, that the terminal device is not successfully handed over from the first MCG to the second MCG.

13. The method according to claim 10, wherein when the terminal device is successfully handed over from the first MCG to the second MCG, the first RLF report comprises RLF information of the first MCG and one or more of the following: identification information of the second MCG or second time information, wherein the second time information indicates second running time of a first timer, wherein the second running time is less than preset duration of the first timer, and the second running time is duration from time when the terminal device sends the RLF information of the first MCG to the second network device by using the first SCG to time when the terminal device receives a response message sent by the second network device.

14. The method according to any one of claims 1 to 13, wherein the third network device is the first network device or the second network device.

15. The method according to any one of claims 1 to 13, wherein when the RLF occurs in the first SCG managed by the second network device, the third network device is the second network device.

16. A communication method, comprising:
receiving, by a third network device, a first RLF report from a terminal device, wherein the first RLF report is related to whether link recovery for a first master cell group MCG succeeds after an RLF occurs in the first MCG, and the terminal device separately communicates with a first network device and a second network device, wherein the first network device manages the first master cell group MCG, the second network device manages a first secondary cell group SCG, and an MCG link recovery function is configured for the first SCG; and
adjusting, by the third network device, a network parameter related to the first RLF report based on the first RLF report.

17. The method according to claim 16, wherein when the link recovery for the first MCG fails, the first RLF report comprises a cause of a link recovery failure.

18. The method according to claim 17, wherein the cause of the link recovery failure comprises one or more of the following: the first SCG is added, the first SCG is changed, or transmission of the first SCG is suspended.

19. The method according to claim 16, wherein when the link recovery for the first MCG fails, the first RLF report comprises one or more of the following: a cause of a link recovery failure, indication information indicating whether RLF information of the first MCG is successfully sent to the second network device by using the first SCG, first time information, or RLF information of the first SCG, wherein the first time information indicates first running time of a first timer, wherein the first running time is greater than or equal to preset duration of the first timer, and the first running time is duration from time when the terminal device sends the RLF information of the first MCG to the second network device by using the first SCG to time when the terminal device initiates a radio resource control RRC re-establishment procedure.

20. The method according to claim 19, wherein the cause of the link recovery failure comprises one or more of the following: the link recovery for the first MCG fails because beam recovery fails after a beam of the first SCG fails, random access for the first SCG fails, or a maximum quantity of radio link control RLC retransmissions for the first SCG is reached.

21. The method according to claim 19, wherein the RLF information of the first SCG comprises one or more of the following: identification information of the first SCG, a cause of an RLF that occurs in the first SCG, or a cause of a change failure in the first SCG.

22. The method according to claim 16, wherein when the link recovery for the first MCG succeeds, the first RLF report is further related to whether the terminal device is successfully handed over from the first MCG to a second MCG.

23. The method according to claim 22, wherein when the terminal device is not successfully handed over from the first MCG to the second MCG, the first RLF report comprises RLF information of the first MCG, and handover failure information of the second MCG or RLF information of the second MCG.

24. The method according to claim 22, wherein when the terminal device is successfully handed over from the first MCG to the second MCG, the first RLF report comprises RLF information of the first MCG and one or more of the following: identification information of the second MCG or second time information, wherein the second time information indicates second running time of a first timer, wherein the second running time is less than preset duration of the first timer, and the second running time is duration from time when the terminal device sends the RLF information of the first MCG to the second network device by using the first SCG to time when the terminal device receives a response message sent by the second network device.

25. The method according to any one of claims 16 to 24, wherein the third network device is the first network device or the second network device.

26. The method according to any one of claims 16 to 24, wherein when the RLF occurs in the first SCG managed by the second network device, the third network device is the second network device.

27. A communication apparatus, comprising a unit or a module configured to perform the method according to any one of claims 1 to 15.

28. A communication apparatus, comprising a unit or a module configured to perform the method according to any one of claims 16 to 26.

29. A communication apparatus, comprising a processor and a transceiver, wherein
the transceiver is configured to receive and send data or information; and
the processor is coupled to a memory, and is configured to invoke computer instructions in the memory, to perform the method according to any one of claims 1 to 15 by using the transceiver.

30. A communication apparatus, comprising a processor and a transceiver, wherein
the transceiver is configured to receive and send data or information; and
the processor is coupled to a memory, and is configured to invoke computer instructions in the memory, to perform the method according to any one of claims 16 to 26 by using the transceiver.

31. A computer-readable storage medium, wherein the computer-readable storage medium stores computer-executable instructions, and when the computer-executable instructions are invoked by a computer, the method according to any one of claims 1 to 15 or the method according to any one of claims 16 to 26 is performed.

32. A computer program product, comprising instructions, wherein when the instructions are run on a computer, the method according to any one of claims 1 to 15 or the method according to any one of claims 16 to 26 is performed.

33. A chip, wherein the chip is coupled to a memory, and is configured to read and execute program instructions stored in the memory, to implement the method according to any one of claims 1 to 15 or the method according to any one of claims 16 to 26.
